Europäisches Patentamt

European Patent Office

Office européen des brevets

(11) Publication number: **0 361 569**
**A1**

# EUROPEAN PATENT APPLICATION

(21) Application number: 89202221.1

(22) Date of filing: 01.09.89

(51) Int. Cl.⁵: **B65D 81/34** , **A47J 31/06**

(30) Priority: 28.09.88 BE 8801112

(43) Date of publication of application:
04.04.90 Bulletin 90/14

(84) Designated Contracting States:
AT BE CH DE ES FR GB GR IT LI LU NL SE

(71) Applicant: "SAS"
Dennenlaan 10
B-2340 Beerse(BE)

(72) Inventor: Sas, Herman
Lilsedijk 34
B-2340 Beerse(BE)

(74) Representative: Pieraerts, Jacques et al
Bureau Gevers S.A. Rue de Livourne 7, B.1
B-1050 Bruxelles(BE)

(54) Coffee filter.

(57) This invention relates to a coffee filter wherein a predetermined amount of grinded coffee is kept between an upper and an under filter paper and wherein both filter papers are fixed to a holder, which holder is either a filter, which is provided for receiving an amount of water, or a cartridge for a filter and comprises an upstanding edge, characterized in that said upper filter paper (1) forms together with said filter (2) or with said cartridge (3) a tub which means that the peripheral border (7) of the upper filter paper (1) is folded obliquely upwards.

Fig.2.

## Coffee filter

This invention relates to a coffee filter wherein a predetermined amount of grinded coffee is kept between an upper and an under filter paper and wherein both filter papers are fixed to a holder which holder is either a filter, which is provided for receiving an amount of water, or a cartridge for a filter.

The object of the invention is to provide a coffee filter which has an improved extraction yield, due to a constant percolation speed of the coffee drawing, and which moreover allows a considerable space saving for packing and mailing.

By coffee filters of the so-called disposable type, the grinded coffee is enclosed between two filter paper layers. Hereby the upper filter paper is always flat i.e. more or less tightly stretched and glued to (mostly sealed to) an inner edge of the filter or of the cartridge to be mounted in a filter.

Due to the brew-up with boiling water, $CO_2$ gas is generated in the grinded coffee which causes the formation of a gas bubble, the escape of which is more or less slowed down by the upper filter paper. The $CO_2$ bubble which cannot escape, forms an obstacle as a result of which the boiling water penetrates badly or irregularly through the grinded coffee.

Particularly when the grinded coffee is kept between two filter papers in a so-called cartridge provided for being pressed in the open bottom of the cartridge casing of a filter, the upper filter paper can, during this manipulation, be teared up by the fingers, mostly the thumbs, of the user.

The object of the invention is thus to remedy these drawbacks and, as already explained herebefore, to reduce the volume of the filters stacked in each other or the volume of the separate cartridges.

To realize this according to the invention said upper filter paper forms together with said holder a tub which means that the peripheral border of the upper filter paper is folded obliquely upwards.

Still according to the invention said upper filter paper is folded upwards according to an angle situated between approximately 40° and approximately 85°, which angle is determined with respect to the plane of the upper filter paper.

A remarkable feature of the invention consists in that said cartridge is substantially cylindrically shaped and has on the outer wall an outwardly projecting ring to which said peripheral border of the upper filter paper is joined after it has been folded over the free edge of the cylindrically shaped cartridge.

A detail of the invention consists in that said cartridge is on the outer side furthermore provided with a snapping edge which remains, after being pressed in a cartridge casing, snapped to this cartridge casing.

Other details and advantages of the invention will become apparent from the following description of a coffee filter according to the invention. This description is solely given by way of example and does not limit the invention. The reference numerals relate to the accompanying figures.

Figure 1 is a cross-section through a coffee filter according to the invention and shows, on the one hand, the gain of space when two filters are stacked in each other and, on the other hand, the formation of a gas bubble in the space between the upper and the under filter paper.

Figure 2 is a cross-section through a cartridge casing and shows the cartridge before and after it is pressed in this cartridge casing.

Figure 3 shows, cross-sectionally and on a larger scale, the stacking possibilities of a set of filter cartridges according to the invention.

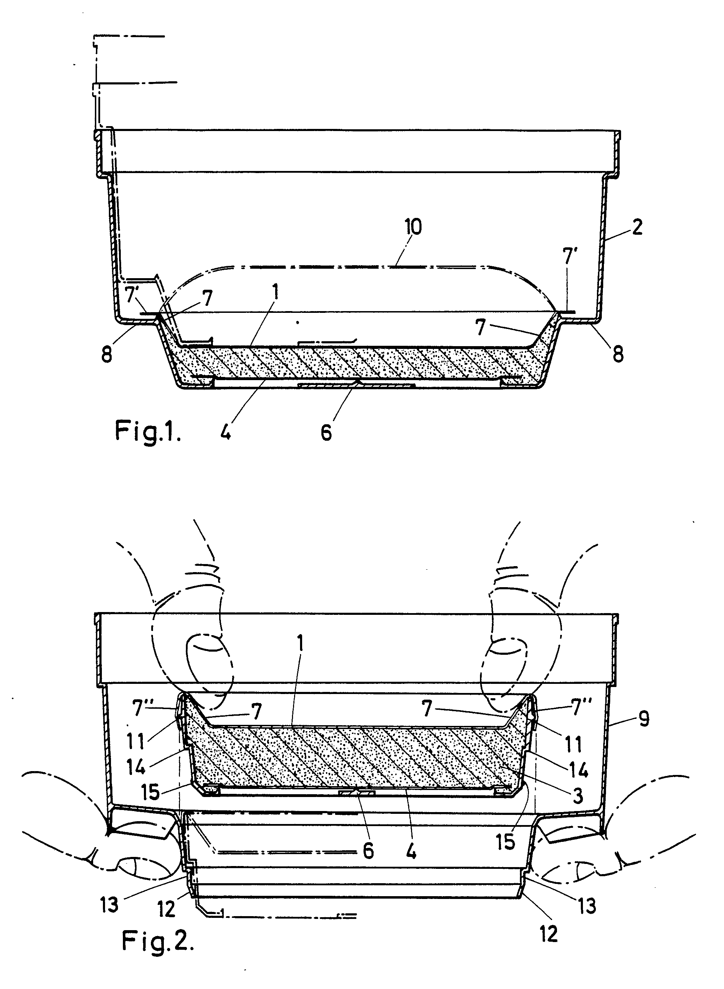

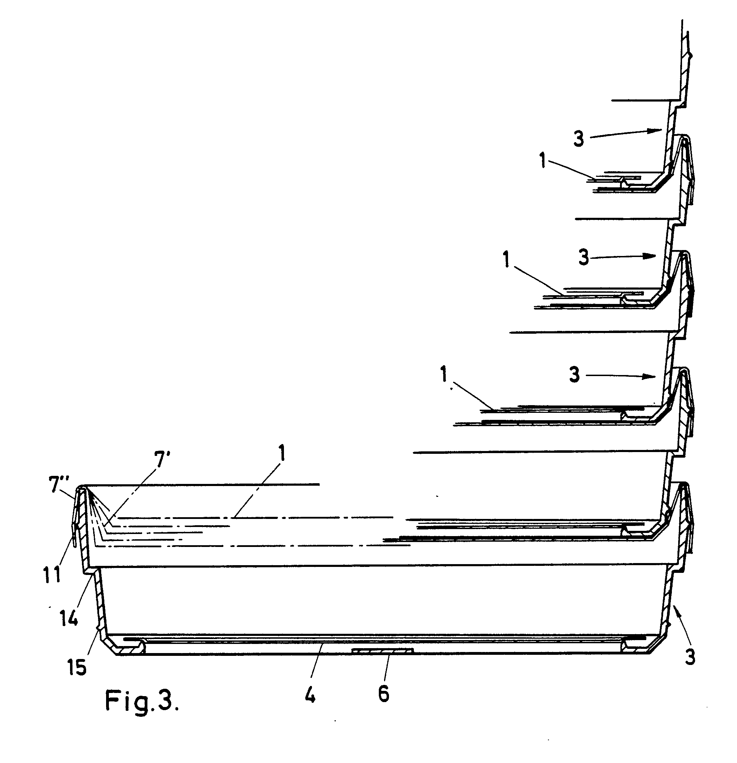

The coffee filter according to these figures is characterized by the way according to which the upper filter paper 1 is fixed to a holder. In the two embodiments the term "holder" refers either to a filter 2 (Figure 1) or to a ring shaped cartridge 3 (Figures 2 and 3).

The grinded coffee 5 is kept between the upper filter paper 1 and the under filter paper 4. The under filter paper 4 rests in both cases upon a support 6 which is part of the holder. It will be clear that other structures for supporting the under filter paper are also possible but these components do not belong to the essence of the invention.

Characterizing for the invention is the formation of a "tub" which is formed by folding the peripheral border 7 of the upper filter paper 1 over an angle in such a way with respect to the holder (filter 2 of cartridge 3) that this peripheral border extends internally obliquely upwards. This tub is clearly visable in Figures 1 and 2.

The peripheral border 7 forms an angle, situated between approximately 40° and approximately ly 85°, with the plane of the upper filter paper 1.

In the embodiment according to Figure 1 in which use is made of a filter 2, the most outwardly oriented part of the peripheral border 7, i.e. the part indicated by reference 7′, is glued to the thereto provided flat shoulder portion 8 of the filter 2.

In the embodiment according to Figures 2 and 3 use is made of a cartridge 3 which is snapped into a cartridge casing 9 to be described hereafter. In this case the peripheral border 7 of the upper filter paper 1 is also folded obliquely upwards to form the above described "tub". The most outwardly situated part of the peripheral border 7, i.e. the circularly shaped strip 7″, is folded over the edge of the cartridge 3 and is joined to the latter in a manner to be described hereafter.

In both cases when boiling water is now poured into the filter 2 or in the cartridge casing 9, a gas bubble is formed which is indicated in Figure 1 by the mixed line 10. In fact, the upper filter paper is not stretched so regularly and so tightly but the formation of a gas bubble in inevitable. The presence of this gas bubble causes the regular percolation of the boiling water to be strongly hampered. Due to the tub shaped profile of the upper filter paper the vapours and the gasses generated under the upper filter paper become more space to escape and the percolation of the poured boiling water is no longer hampered. It has been determined experimentally that a free space of approximately 1/3 of the total volume has to be present between the grinded coffee and the upper filter paper.

Referring to Figure 2, one will see that the danger of damaging the upper filter paper 1 by the pressure exerted thereon by the fingers during the pressing of the cartridge 3 in the cartridge casing, has become practically negligible. The fingers are namely pushing sidewards on the filter paper and especially on the upper edge of the cartridge and no longer on the flat or tightly stretched upper filter paper.

Moreover, a considerable saving of space is realized when stacking filters with such a tub shaped bottom. This has a very favourable influence on the packing and mailing costs.

The invention is further characterized by the structure of the cartridge 3 as well as of the cartridge casing 9 cooperating therewith.

In the first place, the circularly shaped part 7″ of the peripheral border 7 is folded outwardly over the edge of the cartridge 3 and joined to the latter. The ring shaped cartridge 3 has an outwardly projecting ring 11 to which the folded upper filter paper is joined. In this way, a satisfactory sealing against seepage of water between the cartridge 3 and the cartridge casing 9 is guaranteed.

The presence of a paper layer along the outer side of the cartridge at the height of the ring 11 is an important feature of the invention.

Finally the cartridge casing comprises at the bottom a clamping collar 12 and a shoulder portion 13. The shoulder portion 13 forms a fender for the shoulder portion 14 of the cartridge whereas the resilient clamping collar 12 ensures a clamping of the cartridge when the latter is pressed in the clamping collar until this collar is snapped beyond a snapping edge 15 near the bottom of the cartridge.

This unique sealing construction copes with all the possible irregularities concerning the circularity of the components and this as a result of dimension variations of the cartridge as well as of the cartridge casing.

The invention is of course not limited to the above described embodiment but many modifications can be applied to the latter without leaving the scope of the patent application.

**Claims**

1. Coffee filter wherein a predetermined amount of grinded coffee is kept between an upper and an under filter paper and wherein both filter papers are fixed to a holder, which holder is either a filter, which is provided for receiving an amount of water, or a cartridge for a filter and comprises an upstanding edge, characterized in that said upper filter paper (1) forms together with said filter (2) or with said cartridge (3) a tub which means that the peripheral border (7) of the upper filter paper (1) is folded obliquely upwards.

2. Coffee filter as claimed in claim 1, characterized in that said upper filter paper (1) is folded upwards according to an angle approximately situated between 40° and 85°, which angle is determined with respect to the plane of the upper filter (1).

3. Coffee filter as claimed in either one of claims 1 and 2, characterized in that said peripheral border (7) is fixed to the inner side of said filter (2).

4. Coffee filter as claimed in either one of claims 1 and 2, characterized in that said peripheral border (7) is folded over the edge of said cartridge (3) and fixed to the outer side of said cartridge.

5. Coffee filter as claimed in claim 4, characterized in that said filter paper (1) is joined (sealed) to the upper peripheral edge of said cartridge (3).

6. Coffee filter as claimed in any one of claims 1 to 5, characterized in that said cartridge (3) is substantially cylindrically shaped and has on the outer wall an outwardly projecting ring (11) to which the cylindrically shaped outer border (7″) of said upper filter paper (1) is joined after being folded over the free edge of the cylindrically shaped cartridge (3).

7. Coffee filter as claimed in claim 6, characterized in that said cartridge is on the outer side furthermore provided with a snapping edge (15) which remains, after being pressed in a cartridge casing (9), snapped to this cartridge casing.

8. Coffee filter as claimed in claim 7, characterized in that said cartridge casing (9) comprises at the bottom an inwardly projecting clamping collar (12) which is provided for being pushed resiliently over said snapping edge (15).

Fig.1.

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1575181 (LUEDTKE) <br> * page 2, lines 40 - 32; figures 1, 2 * | 1-3, 5 | B65D81/34 <br> A47J31/06 |
| P,X | WO-A-8903653 (SOUTHERN TEA COMPANY) <br> * page 8, line 4 - page 10, line 5; figures 1-3 * | 1-3 | |
| X | US-A-3971305 (DASWICK) <br> * column 2, line 42 - column 3, line 37; figures 1, 2, 6, 7 * | 1-3 | |
| Y | | 4, 7, 8 | |
| Y | GB-A-1168470 (BARRERA) <br> * the whole document * | 4 | |
| Y | DE-A-1429932 (GRUN) <br> * page 7, lines 8 - 17; figure 1 * | 7, 8 | |
| A | FR-A-2213757 (DONOT) <br> * page 2, lines 18 - 40; figure 1 * | 1, 3 | |
| A | CA-A-900870 (DOVER) | | |

TECHNICAL FIELDS SEARCHED (Int. Cl.5 )

B65D
A47J

The present search report has been drawn up for all claims

| Place of search | Date of completion of the search | Examiner |
|---|---|---|
| THE HAGUE | 10 JANUARY 1990 | MEINDERS H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)